# EUROPEAN PATENT APPLICATION

(11) **EP 4 671 950 A1**
(43) Date of publication of application: **31.12.2025**
(21) Application number: 25158930.5
(22) Date of filing: 19.02.2025
(51) Int. Cl.: G06F 3/06, G06F 16/215

(54) **METHOD, DEVICE AND STORAGE MEDIUM FOR DEDUPLICATION OF OBJECT STORAGE SYSTEM**

(30) Priority: 26.06.2024 CN 202410841039
(71) Applicant: Beijing Volcano Engine Technology Co., Ltd., Beijing 100190 (CN)
(72) Inventor: LIN, Wei, Chaoyang District, Beijing 100028 (CN); HU, Zhenguo, Chaoyang District, Beijing 100028 (CN); MA, Jianjin, Chaoyang District, Beijing 100028 (CN)
(74) Representative: Marks & Clerk LLP

(57) **Abstract**

The disclosed embodiment provides a method, device and storage medium for deduplication of an object storage system, which determines (S201) the target granularity for deduplication of the object storage system, which is the object granularity or the slice granularity; obtains (S202) the first check value of each data of the target granularity in the object storage system, and screens out the data with the same first check value from the object storage system to determine as duplicate data; adds (S203), by taking one data in any group of duplicate data as the reference data, a soft link to the metadata of other data except the reference data in any group of duplicate data to point to the reference data, and recycles the storage space of other data.

## Description

### FIELD

The embodiments of the present disclosure relate to the technical field of computers and network communications, and in particular to a method, device, and storage medium for deduplication of an object storage system.

### BACKGROUND

Deduplication technology is an effective method to save data storage space. Currently, deduplication technology has been widely used in storage systems in data centers, mainly in backup and archive storage systems, primary storage systems, such as all-flash arrays, etc.

Object storage is a technology that stores and manages data in an unstructured format (called an object). Currently, object storage cloud service has been widely used in various industries and serve hundreds of millions of customers. However, currently, large-scale object storage systems in the industry do not support the deduplication function.

### SUMMARY

The embodiments of the present disclosure provide a method, device and storage medium for deduplication of an object storage system, so as to realize automatic deduplication of the object storage system.

In a first aspect, an embodiment of the present disclosure provides a method for deduplication of an object storage system, comprising:
determining target granularity for deduplication of the object storage system, the target granularity being object granularity or slice granularity, wherein the object granularity takes the entire actual data of the object as a data processing unit, and the slice granularity takes the slice data corresponding to the actual data of the object as a data processing unit;
performing duplicate data screening on each data of target granularity in the object storage system;
adding, by taking one data in any group of duplicate data as the reference data, and a soft link to the metadata of other data in any group of duplicate data except the reference data to point to the reference data, and recycling storage space of the other data.

In a second aspect, an embodiment of the present disclosure provides a deduplication device for an object storage system, comprising:
a policy setting unit, configured to determine target granularity of deduplication of the object storage system, the target granularity being object granularity or slice granularity, wherein the object granularity takes entire actual data of an object as a data processing unit, and the slice granularity takes the slice data corresponding to the actual data of the object as a data processing unit;
a screening unit, configured to perform duplicate data screening on each data of target granularity in the object storage system;
a deleting unit, configured to add, by taking one data in any group of duplicate data as the reference data, a soft link in a metadata of other data in any group of the duplicate data except the reference data to point to the reference data, and recycle the storage space of the other data.

In a third aspect, an embodiment of the present disclosure provides an electronic device, comprising: at least one processor and a memory;
the memory stores computer-executable instructions;
the at least one processor executes the computer-executable instructions stored in the memory, causing the at least one processor to execute the method for deduplication of the object storage system as described in the first aspect and various possible designs of the first aspect.

In a fourth aspect, an embodiment of the present disclosure provides a computer-readable storage medium, wherein the computer-readable storage medium stores computer-executable instructions. The computer-executable instructions, when executed by a processor, implement the method for deduplication of an object storage system as described in the first aspect and various possible designs of the first aspect.

In a fifth aspect, an embodiment of the present disclosure provides a computer program product, comprising computer executable instructions. The computer executable instructions, when executed by a processor, implement the method for deduplication of an object storage system as described in the first aspect and various possible designs of the first aspect.

The method, device and storage medium for deduplication of an object storage system provided by the embodiment of the present disclosure determine the target granularity of deduplication of the object storage system, the target granularity is the object granularity or the slice granularity, wherein the object granularity takes the entire actual data of the object as the data processing unit, and the slice granularity takes the slice data corresponding to the actual data of the object as the data processing unit; perform duplicate data screening on each data of the target granularity in the object storage system; add, by taking one data in any group of duplicate data as the reference data, a soft link to the metadata of other data in any group of the duplicate data except the reference data to point to the reference data, and recycle the storage space of the other data. By determining the target granularity of the deduplication to maximize the benefit of deduplication, and by screening duplicate data, and pointing to the reference data through the soft link in the metadata of duplicate data and recycling the storage space of duplicate data, the performance overhead of deduplication in the object storage system is reduced, and the stability and security are improved; and there is no need to add complex data management and operation and maintenance operations to customers, thereby improving the user experience.

### BRIEF DESCRIPTION OF THE DRAWINGS

In order to more clearly illustrate the embodiments of the present disclosure or the technical solutions in the prior art, the drawings required for use in the embodiments or the description of the prior art will be briefly introduced below. Obviously, the drawings described below are some embodiments of the present disclosure. For ordinary technicians in this field, other drawings can be obtained based on these drawings without paying creative labor.
FIG. 1a and FIG. 1b are exemplary diagrams of a method for deduplication of an object storage system in the related art;
FIG. 2 is a schematic diagram of a method for deduplication of an object storage system according to an embodiment of the present disclosure;
FIG. 3 is a schematic diagram of a method for deduplication of an object storage system provided by another embodiment of the present disclosure;
FIG. 4 is a schematic diagram of a method for deduplication in of object storage system provided by another embodiment of the present disclosure;
FIG. 5 is a schematic diagram of a method for deduplication of an object storage system provided by another embodiment of the present disclosure;
FIG. 6 is a structural block diagram of a deduplication device for an object storage system provided by an embodiment of the present disclosure;
FIG. 7 is a schematic diagram of the hardware structure of an electronic device provided in an embodiment of the present disclosure.

### DETAILED DESCRIPTION OF EMBODIMENTS

In order to make the purpose, technical solution and advantages of the embodiments of the present disclosure clearer, the technical solution in the embodiments of the present disclosure will be clearly and completely described below in conjunction with the drawings in the embodiments of the present disclosure. Obviously, the described embodiments are part of the embodiments of the present disclosure, not all of the embodiments. Based on the embodiments in the present disclosure, all other embodiments obtained by ordinary technicians in this field without creative work are within the scope of protection of the present disclosure.

Data deduplication technology is an effective method to save data storage space. Currently, data deduplication technology has been widely used in storage systems in data centers, mainly in backup and archive storage systems, primary storage systems, such as all-flash arrays, etc.

Object storage is a technology that stores and manages data in an unstructured format (called an object). Currently, object storage cloud service have been widely used in various industries and serve hundreds of millions of customers. The industry's object storage cloud services generally have the following characteristics: 1) large-scale, support for massive storage, and multi-tenancy; 2) elasticity and strong scalability; 3) persistence, high reliability, and low cost.

However, due to factors such as technical complexity, large-scale object storage systems in the industry currently do not support the deduplication function. For example, the performance consumption of deduplication in object storage systems is too high, affecting the operation of the object storage system, or it is easy to have inaccurate duplicate data search and large data granularity, resulting in little final benefit and possible security risks.

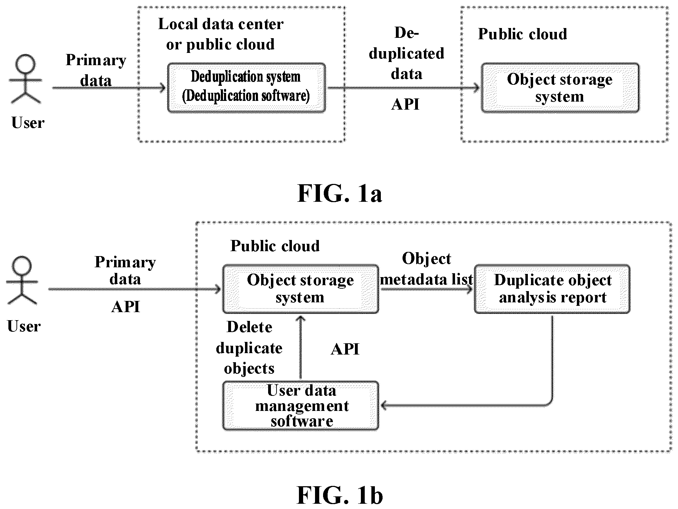

However, since object storage serves a large number of customers, with a wide range of business types and rich customer data styles, for some users, such as the scenarios where using object storage for archiving and backup, the data backed up multiple times usually has a lot of duplicate data. Deduplication is very valuable and can greatly reduce the storage cost of tenants. For such scenarios with high data duplication, there are mainly the following two types of solutions commonly used in the industry:
Solution 1: Add a deduplication system middle layer between users and the object storage system:
   For example, as shown in FIG. 1a, the user first transmits the primary data to the middle-layer deduplication system or deduplication software. The deduplication system may be deployed in a local data center or a public cloud. After the deduplication system deduplicates the primary data, it calls the API (Application Programming Interface) provided by the object storage system to store the deduplicated data in the object storage system.
Solution 2: Based on the analysis and reporting capabilities provided by the object storage system, manage duplicate data by users themselves:
   For example, as shown in FIG. 1b, users write primary data in the form of objects into the public cloud object storage system through the API interface provided by the object storage system; the object storage system provides multi-dimensional analysis capabilities based on the object metadata list, including analysis reports on duplicate objects; users deploy data management software on the public cloud, rely on duplicate object analysis reports as input, make some decisions and object data management, and may call the object storage system to delete duplicate objects to save the cost of storage on the cloud.

However, both Solution 1 and Solution 2 essentially build duplicate data management capabilities outside the object storage system, so both have the problem of adding complex data management and operation and maintenance operations to customers.

Among them, for the deduplication system in Solution 1, users can deploy mature commercial application software, but there are several problems: 1) It needs to hijack the protocol, and the data will be fragmented, and additional metadata management is required, which requires online processing, resulting in increased write latency; 2) It increases some operation and maintenance burdens. The backend object storage is elastic and supports unlimited expansion. The deduplication system needs to have sufficient elasticity and scalability to match; 3) This solution is coupled with the deduplication system, which increases the management difficulty for users and requires high IT operation and maintenance capabilities of customers. The customer base of cloud storage is huge, and for some customers, it is difficult to meet the above requirements.

Solution 2 essentially exposes the complex deduplication process to customers. Users need to develop data management software and configure duplicate object processing strategies based on their own business needs. Data management software needs to consider complex concurrency with user operations and requires a unified mechanism to control concurrency, otherwise serious problems such as object data loss may occur. In addition, this solution is currently only applicable to perform deduplication at object granularity. In some scenarios, such as database backup, there are a large number of similar files and a small number of identical files, so the deduplication effect is poor.

In order to solve at least one of the above technical problems, an embodiment of the present disclosure provides a method for deduplication of an object storage system, by determining the target granularity of deduplication of the object storage system, the target granularity is the object granularity or the slice granularity, wherein the object granularity takes the entire actual data of the object as a data processing unit, and the slice granularity takes the slice data corresponding to the actual data of the object as a data processing unit; performing duplicate data screening on each data of the target granularity in the object storage system; adding, by taking one data in any group of duplicate data as the reference data, a soft link to the metadata of other data in any group of duplicate data except the reference data to point to the reference data, and recycling the storage space of the other data. By determining the target granularity of duplicate data to maximize the benefit of deduplication, and by screening duplicate data, and pointing to the reference data through soft links in the metadata of duplicate data and recycling the storage space of duplicate data, the performance overhead of deduplication in the object storage system is reduced, the stability and security are improved, and the purpose of saving storage cost can be effectively achieved; and there is no need to add complex data management and operation and maintenance operations to customers, thereby improving user experience.

It should be noted that the data involved in this application (including but not limited to data used for analysis, stored data, displayed data, etc.) are all information and data authorized by the user or fully authorized by all parties, and the collection, use and processing of relevant data must comply with the relevant laws, regulations and standards of relevant countries and regions, and provide corresponding operation entrances for users to choose to authorize or refuse.

The method for deduplication of the object storage system disclosed in the present invention will be described in detail below in conjunction with specific embodiments.

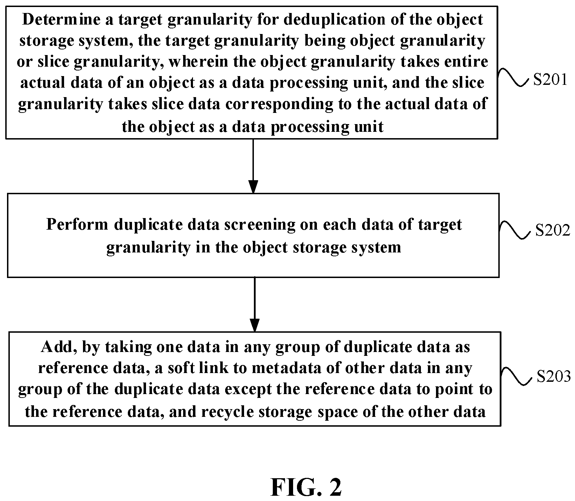

Referring to FIG. 2, FIG. 2 is a flow chart of a method for deduplication of an object storage system provided by an embodiment of the present disclosure. The method of this embodiment can be applied in a terminal device or a server. The method for deduplication of the object storage system comprises:
S201. Target granularity for deduplication of an object storage system is determined, the target granularity being object granularity or slice granularity, wherein the object granularity takes the entire actual data of the object as a data processing unit, and the slice granularity takes the slice data corresponding to the actual data of the object as a data processing unit.

In this embodiment, the object storage system may be any system capable of performing object storage, such as an object storage cloud service.

When it is determined that the object storage system needs to be deduplicated, the deduplication strategy can be determined first. Among them, the most important item in the deduplication strategy is the target granularity of deduplication, that is, at what granularity (data processing unit) to screen duplicate data and perform deduplication. Among them, the target granularity can be object granularity or slice granularity. Object granularity takes the actual data of the object as a whole, screen and delete duplicate actual data of the object. Slice granularity segments the actual data of the object into multiple slices of data, screens and deletes duplicate slices of data. The slice granularity is adopted because in some scenarios, such as in the scenario of updating the actual data of the object, it is possible that only a part of the actual data of the object is updated. The actual data before and after the update of the same object is not duplicate data, but some slice data may be duplicate. Therefore, compared with the object granularity, the use of slice granularity can improve the deduplication effect and save more storage cost.

Optionally, when the target granularity is determined, the benefit calculation method may be used to determine whether the benefit of using the object granularity is greater or the benefit of using the slice granularity is greater. The details are as follows:

A first benefit for deduplication of the object storage system at the object granularity and a second benefit for deduplication of the object storage system at the slice granularity are determined; and the target granularity for deduplication of the object storage system is determined based on the first benefit and the second benefit.

In this embodiment, the first benefit and the second benefit can be measured by the total storage cost saved, that is, the first benefit can be the total storage space saved when the object storage system is deduplicated at the object granularity (including the storage space recycled when deduplication and the new storage space occupied during the processing, such as adding soft links in metadata in subsequent embodiments, resulting in an increase in the storage space occupied by metadata, etc.), and the second benefit can be the total storage space saved when the object storage system is deduplicated at the slice granularity (including the storage space recovered when deduplication and the new storage space occupied during the processing, such as adding soft links in metadata in subsequent embodiments, resulting in an increase in the storage space occupied by metadata, and the new storage space occupied by non-duplicate slice data as new slice data rewritten into the object storage system in subsequent embodiments). In addition, other factors can be combined with the first benefit and the second benefit, such as the consumption of performance, etc., which are not given one by one here. Optionally, the first benefit and the second benefit can be determined by sampling and analyzing the object storage system, or can also be determined based on some historical deduplication processes with reference value (such as data of the same or similar users, etc.).

Further, when the target granularity of deduplication of the object storage system is determined according to the first benefit and the second benefit, it may specifically comprise:

If the difference between the first benefit and the second benefit is less than a preset threshold (for example, 10%), the target granularity is determined to be the object granularity, that is, when the difference between the first benefit and the second benefit is not large, a larger granularity is adopted to reduce the amount of data, reduce performance consumption, and reduce time consumption; or, if the difference between the first benefit and the second benefit is not less than a preset threshold, the granularity corresponding to the maximum benefit between the first benefit and the second benefit is determined as the target granularity, that is, if the difference between the first benefit and the second benefit is large, a larger benefit granularity is adopted to obtain a greater benefit.

Of course, if the maximum benefit of the first benefit and the second benefit is less than the preset benefit threshold, that is, the first benefit and the second benefit are not large, the deduplication function of the object storage system can be turned off. In addition, the opening or closing of the deduplication function of the object storage system can also be controlled by the user to meet the user's needs. In addition, when the user turns on the deduplication function of the object storage system, if the maximum benefit of the first benefit and the second benefit is less than the preset benefit threshold, the deduplication function of the object storage system can also be turned off, otherwise the deduplication can continue.

Optionally, when the second benefit of deduplicating the object storage system at slice granularity is determined, it is taken into account that the segmentation method and /or segmentation length of the actual data of the object may affect the benefit. Therefore, the second benefit of deduplicating the object storage system at slice granularity in the case that different segmentation methods and /or different segmentation lengths are used can be determined respectively. Then, based on the first benefit and the second benefit in multiple different situations, the target granularity for deduplication of the object storage system can be determined. If the target granularity is determined to be the slice granularity, and the second benefit in a certain situation is the largest, the segmentation method and /or segmentation length corresponding to the largest second benefit can also be determined as the target segmentation method and /or target segmentation length, so that the actual data of the object can be segmented based on the target segmentation method and /or target segmentation length in subsequent embodiments. That is, the target segmentation method and /or target segmentation length can also be used as a strategy in the deduplication strategy. Optionally, the segmentation method may include but is not limited to a Content-Defined- Chunking (CDC) or a fixed-length segmentation method, wherein the CDC method can ensure that most of the slice data content of the same object are the same, so as to better save storage cost. For example, the Rabin Fingerprinting algorithm is an algorithm F in the CDC method.

S202. Duplicate data screening on each data of target granularity in the object storage system is performed.

In this embodiment, a first check value of each data of target granularity in the object storage system can be obtained, wherein the first check value can be a SHA1 (Secure Hash Algorithm 1) code, or a CRC (Cyclic Redundancy Check) code, or other types of check codes. If the data of two target granularities are the same data, the first check codes are the same, and therefore the first check code can be used to quickly screen duplicate data of the target granularity in the object storage system.

Optionally, the first check value may be calculated by a specific algorithm, or may be precalculated and stored in the metadata of the object, and obtained from the metadata, where the metadata may be maintained by a metadata management component of the object storage system; or the first check value may also be obtained by other means.

S203. By taking one data in any group of duplicate data as reference data, a soft link is added to metadata of other data in any group of the duplicate data except the reference data to point to the reference data, and recycle storage space of the other data.

In this embodiment, after screening out duplicate data, one of the data in any group of duplicate data is selected as the reference data, which can be retained instead of being deleted, while other data that is duplicated with the reference data needs to be deleted. The deletion process is to add a soft link pointing to the reference data in the metadata of other data that is duplicated with the reference data, and recycle the storage space of other data, that is, the metadata of other data is retained, and only the actual data of other data is deleted. The purpose of the soft link is that the reference data can be found through the soft link when the actual data of these other data is subsequently searched based on the metadata.

The deduplication method of the object storage system of this embodiment determines the target granularity of deduplication of the object storage system, the target granularity is the object granularity or the slice granularity, wherein the object granularity takes the entire actual data of the object as the data processing unit, and the slice granularity takes the slice data corresponding to the actual data of the object as the data processing unit; performs duplicate data screening on each data of the target granularity in the object storage system; adds, by taking one data in any group of duplicate data as the reference data, a soft link to the metadata of other data in any group of duplicate data except the reference data to point to the reference data, and recycles the storage space of the other data. By determining the target granularity of deduplication to maximize the benefit of deduplication, and by screening duplicate data, and pointing to the reference data through soft links in the metadata of duplicate data and recycling the storage space of duplicate data, the performance overhead of deduplication in the object storage system is reduced, and the stability and security are improved; and there is no need to add complex data management and operation and maintenance operations to customers, thereby improving the user experience.

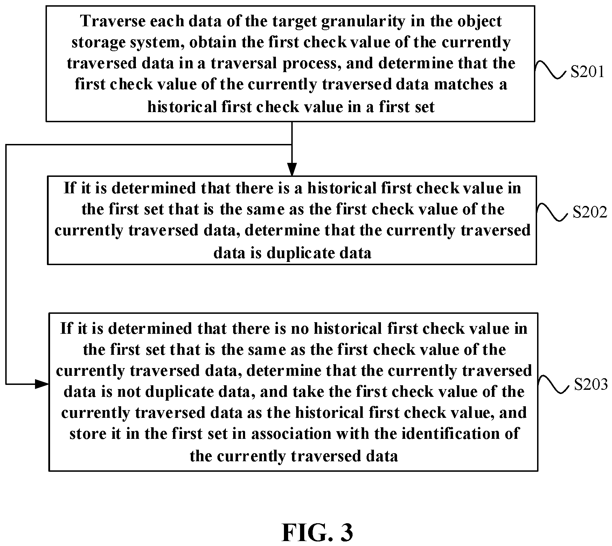

On the basis of any of the above embodiments, in the above embodiments, obtaining a first check value of each data of target granularity in the object storage system, and screening out data with the same first check value from the object storage system to determine as duplicate data, specifically as shown in FIG. 3, may comprise:
S2021. Each data of the target granularity in the object storage system is traversed, a first check value of the currently traversed data is obtained during the traversal process, and it is determined whether the first check value of the currently traversed data matches a historical first check value in the first set;
wherein the first set stores the first check values of each history obtained for the first time in the traversal process and the identification of the corresponding data;
if it is determined that there is a historical first check value in the first set that is the same as the first check value of the currently traversed data, execute S2022; otherwise, execute S2023;
S2022. If it is determined that there is a historical first check value in the first set that is the same as the first check value of the currently traversed data, it is determined that the currently traversed data is duplicate data;
S2023. If it is determined that there is no historical first check value in the first set that is the same as the first check value of the currently traversed data, it is determined that the currently traversed data is not duplicate data, and take the first check value of the currently traversed data as the historical first check value, and store it in the first set in association with the identification of the currently traversed data.

In this embodiment, a first set can be created, and the first set is used to store the first check values and the identification of the corresponding data obtained for the first time during the traversal process, for example, in the form of key-value pairs. For example, in the object granularity, the key-value pair <first check value, object name > can be used to store in the first set, and in the slice granularity, the key-value pair <first check value, slice data name > can be used to store in the first set.

Further, in the process of traversing each data of the target granularity in the object storage system, the first check value of the currently traversed data can be obtained, and it is determined that the first check value of the currently traversed data matches the historical first check value in the first set. If it is determined that there is a historical first check value in the first set that is the same as the first check value of the currently traversed data, it means that the currently traversed data and the data corresponding to the historical first check value are duplicate data; if it is determined that there is no historical first check value in the first set that is the same as the first check value of the currently traversed data, it means that the currently traversed data is not duplicated with any traversed data (but data that is duplicated with the currently traversed data may be found in subsequent traversal processes), and the first check value of the currently traversed data is used as the historical first check value, and is stored in the first set in association with the identification of the currently traversed data and as a matching basis for subsequent traversal processes, and then continue to traverse the data of the next target granularity.

Among them, after it is determined that there is a historical first check value in the first set that is identical to the first check value of the currently traversed data, thereby it is determined that the currently traversed data and the data corresponding to the historical first check value are duplicate data, the data corresponding to the historical first check value can be used as reference data, and a soft link can be added to the metadata of the currently traversed data to point to the reference data, and the storage space of the currently traversed data can be recycled, thereby completing the traversal of the currently traversed data and continuing to traverse the data of the next target granularity.

Based on the above embodiments, there are some differences in the processing process for the target granularity being the object granularity and the slice granularity. The two granularities will be described separately below.

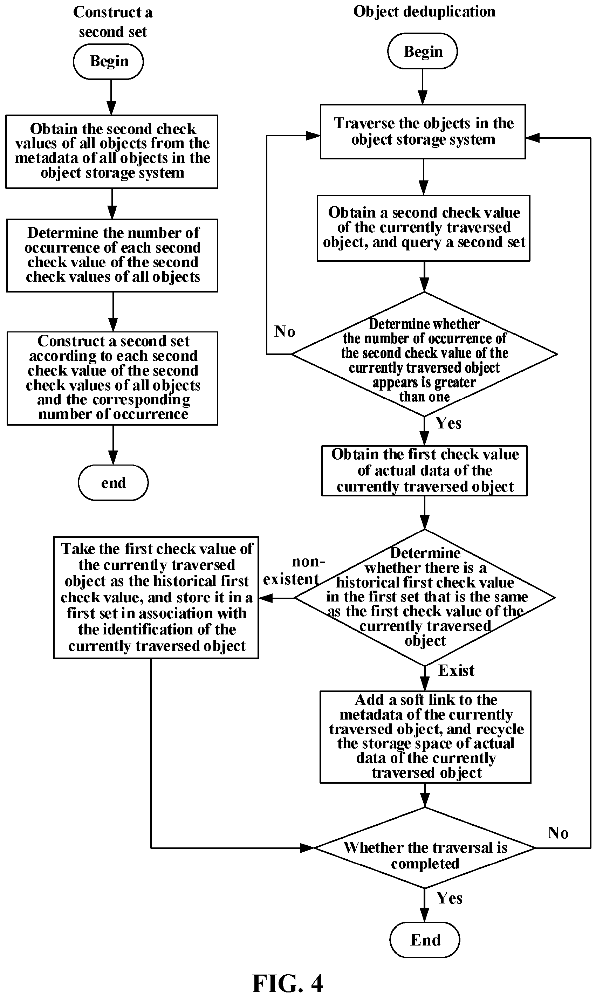

In one embodiment, the target granularity is the object granularity, and the overall process of deduplication may be shown in FIG. 4. In the above embodiment, traversing each data of the target granularity in the object storage system and obtaining the first check value of the currently traversed data during the traversal process may specifically comprise:
Traversing each object in the object storage system, obtaining a second check value of the currently traversed object from metadata of the currently traversed object during the traversal process, and querying the number of occurrence of the second check value of the currently traversed object from a second set, wherein the second set includes each of the second check values of all objects in the object storage system and the corresponding number of occurrence;
If the second check value of the currently traversed object appears more than once, the actual data of the currently traversed object is obtained, and the first check value of the actual data of the currently traversed object is obtained.

In this embodiment, the metadata of each object in the object storage system may pre-store the second check value of each object. The second check value may be a CRC code or MD5 (Message-Digest Algorithm 5), or a SHA1 code or other check value. Similarly, if the actual data of two objects are the same, the second check values of the two objects are the same. Based on this, the second check values of all objects may be obtained in advance from the metadata of all objects in the object storage system, and the number of occurrence (reference count) of each second check value in the second check values of all objects may be determined. A second set may be constructed based on each second check value in the second check values of all objects and the corresponding number of occurrence. For example, storing in the second set in a key-value pair format, and the key-value pair may be <CRC, number of occurrence > or <Md5, number of occurrence>. Optionally, the specific process of constructing the second set may be to traverse the metadata of all objects in the object storage system, obtain the second check value of the currently traversed object during the traversal process, and query whether the same second check value exists in the second set. If not, it will be written into the second set in the form of the above key-value pair, and the number of occurrence will be recorded as 1; if it exists, the number of occurrence of the second check value in the second set will be increased by 1 to update the number of occurrence. In this embodiment, the second set can be updated in an atomic manner to ensure the accuracy of the update process.

On the basis of having obtained the second set, in this embodiment, each object in the object storage system can be traversed. In specific implementation, the object metadata list of the object storage system can be traversed. During the traversal process, the second check value of the current traversed object is obtained from the metadata of the current traversed object, and the number of occurrence of the second check value of the current traversed object is queried from the second set; if the number of occurrence of the second check value of the current traversed object is greater than once, it means that the current traversed object is duplicate data, but at this time it is not clear with whom the current traversed object is duplicated, and whether the data duplicated with the current traversed object has been traversed and processed. Therefore, at this time, the actual data of the current traversed object can be obtained, wherein the actual data of the object can be maintained by the actual data storage component of the object storage system, and the first check value of the actual data of the current traversed object is obtained, and the search process based on the first check value in the above embodiment is performed. In this embodiment, if the number of occurrence of the second check value of the current traversed object is not greater than once, there is no need to obtain the first check value and other subsequent processes, which greatly reduces performance consumption and time consumption.

Furthermore, after obtaining the first check value of the actual data of the currently traversed object, it can be determined whether the first check value of the currently traversed object matches the historical first check value in the first set; if it is determined that there is a historical first check value in the first set that is identical to the first check value of the currently traversed object, then it is determined that the currently traversed object is duplicate data, and the object corresponding to the historical first check value in the first set that is identical to the first check value of the currently traversed data is used as a reference object, a soft link is added to the metadata of the currently traversed object to point to the reference object, and the storage space of the actual data of the currently traversed object is recycled; or, if it is determined that there is no historical first check value in the first set that is identical to the first check value of the currently traversed object, then it is determined that the currently traversed object is not duplicate data, and the first check value of the currently traversed object is used as the historical first check value, and is stored in the first set in association with the identification of the currently traversed object.

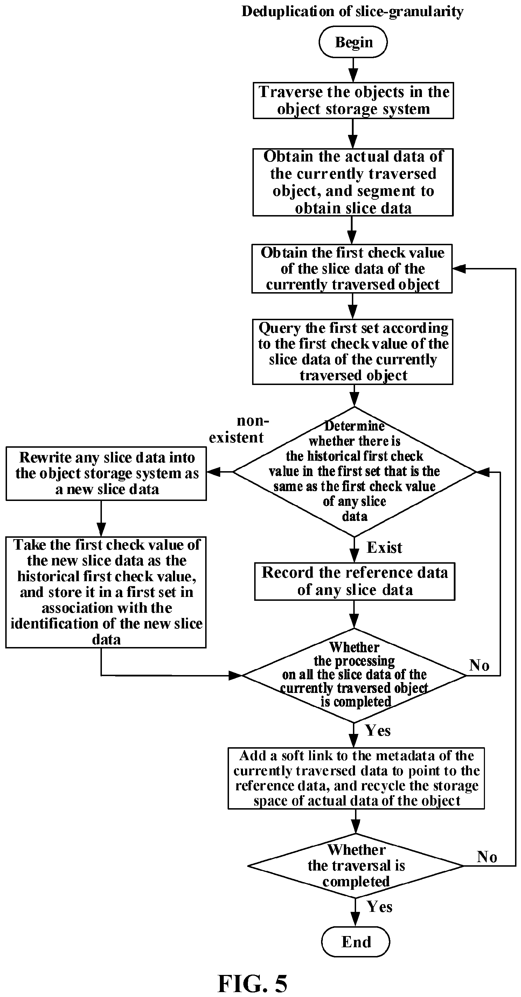

In another embodiment, the target granularity is slice granularity, and the overall process of deduplication may be shown in FIG. 5. In the above embodiment, traversing each data of the target granularity in the object storage system and obtaining the first check value of the currently traversed data during the traversal process may specifically comprise:
traversing each object in the object storage system, acquiring actual data of the currently traversed object during the traversal process, and segmenting the actual data of the currently traversed object to obtain slice data; and
obtaining a first check value of the slice data of the currently traversed object.

In this embodiment, since the second check value in the second set in the above example is obtained based on the entire actual data of the object, the slice data in this embodiment is no longer applicable. In this embodiment, each object in the object storage system is traversed. In the specific implementation, the object metadata list of the object storage system can be traversed, and the actual data of the current traversed object is obtained during the traversal process, and the actual data of the current traversed object is segmented using the segmentation method and /or segmentation length determined in the above embodiment to obtain slice data, and then the first check value of the slice data is obtained for the slice data of the current traversed object, respectively, where the first check value is the same as in the above embodiment and is not limited here.

Further, when duplicate data is screened according to the first set, if it is determined that there is a historical first check value in the first set identical to the first check value of any slice data of the currently traversed object, then it is determined that any slice data is duplicated with the slice data corresponding to the historical first check value; if it is determined that there does not exist in the first set a historical first check value identical to the first check value of any slice data, then it can be determined that any slice data is not duplicate data, and the any slice data is rewritten into the object storage system as a new slice data, occupying a new storage space, and the first check value of the new slice data is used as the historical first check value, and is stored in the first set in association with the identification of the new slice data.

Furthermore, after the above process, the first check value of each slice data of the currently traversed object has the same historical first check value in the first set (including the slice data that is determined not to be duplicate data, which is also the same as the historical first check value of the new slice data newly added to the first set), that is, at this time, each slice data of the currently traversed object can find the slice data that is repeated with each other in the first set, and the slice data corresponding to all the slice data included in the currently traversed object in the first set (that is, the slice data with the same first check value as each other) are used as reference data, and soft links pointing to each reference data are added to the metadata of the currently traversed object, and pointing to each slice data used as reference data through each soft link, and the storage space occupied by the entire actual data of the currently traversed object is recycled.

Furthermore, after the processing of the currently traversed object is completed, the next object is traversed until all objects are processed.

On the basis of any of the above embodiments, considering that the above deduplication method for object storage system can be to dedupficate all data in the object storage system, or to dedupficate part of the data in the object storage system, in this embodiment, a target range for deduplication in the object storage system can be first determined to perform deduplication within the target range, that is, the processing processes in the above embodiments are all performed within the target range of the object storage system. Specifically, target granularity for deduplication within the target range of the object storage system is determined, a first check value of each data of the target granularity within the target range of the object storage system is obtained, and data with the same first check value screened out from the target range of the object storage system is determined as duplicate data; one data in any group of duplicate data is used as reference data, and a soft link is added to the metadata of other data in any group of duplicate data except the reference data to point to the reference data, and storage space for other data is recycled, which will not be described in detail here.

Optionally, the object storage system may include multiple data buckets, so the target range for deduplication in the object storage system may be one or more target data buckets among all data buckets in the object storage system, wherein optionally, the target data bucket may be a data bucket of the same user, or a data bucket selected from all data buckets in the object storage system by other means.

Assuming that there are multiple target data buckets, whether to use one target data bucket or multiple target data buckets as the target range for deduplication can be determined in the following way.

Obtaining a second check value for each object in a plurality of target data buckets; determining a first duplication ratio of objects in each target data bucket and a second duplication ratio of all objects in the plurality of target data buckets based on the second check value; determining whether a target range for deduplication in the object storage system is one target data bucket or a plurality of target data buckets based on the first duplication ratio and the second duplication ratio.

In this embodiment, by obtaining the second check values of all objects in multiple target data buckets (for example, obtained from metadata in the above embodiment), a preliminary screening of duplicate data can be performed, and then the amount of duplicate data in the single target data bucket can be determined based on the second check values of each object in the single target data bucket, and the first duplication ratio of the objects in the single target data bucket can be determined. Similarly, the amount of duplicate data in the single target data bucket can be determined based on the second check values of each object in the multiple target data buckets, and the second duplication ratio of the objects in the multiple target data buckets can be determined. Then, based on the first duplication ratio and the second duplication ratio, it can be determined whether the target range being one target data bucket has a greater benefit or being multiple target data buckets. When the second repetition ratio of all objects in multiple target data buckets is determined, the second repetition ratio of objects in different data bucket combinations in the multiple target data buckets can be determined. For example, assuming that the multiple target data buckets include target data bucket 1, target data bucket 2, and target data bucket 3, the second repetition ratio of all objects in target data bucket 1 and target data bucket 2, the second repetition ratio of all objects in target data bucket 1 and target data bucket 3, the second repetition ratio of all objects in target data bucket 2 and target data bucket 3, and the second repetition ratio of all objects in target data bucket 1, target data bucket 2, and target data bucket 3 can be determined. Accordingly, the target range may be a single target data bucket or any of the above-mentioned data bucket combinations.

Optionally, when a target range for deduplication in the object storage system is determined according to the first duplication ratio and the second duplication ratio, the method may specifically comprise:
If the second duplication ratio exceeds the preset ratio, it means that there are more duplicate data in multiple target data buckets, and the target range can be determined to be multiple target data buckets, which has greater benefit; or, if the second duplication ratio does not exceed the preset ratio, and the first duplication ratio corresponding to any target data bucket exceeds the preset ratio, it means that there may not be much duplicate data between multiple target data buckets, and there are more duplicate data in a single target data bucket, and the target range is determined to be any target data bucket. Of course, there may be more than one target data bucket whose corresponding first duplication ratio exceeds the preset ratio. Each target data bucket whose first duplication ratio exceeds the preset ratio can be used as a target range, respectively, to delete duplicate data in each target range.

Optionally, the method for deduplication of an object storage system of any of the above embodiments can perform deduplication offline in the background, without affecting the normal operation of the object storage system, thereby improving the security and stability of the system.

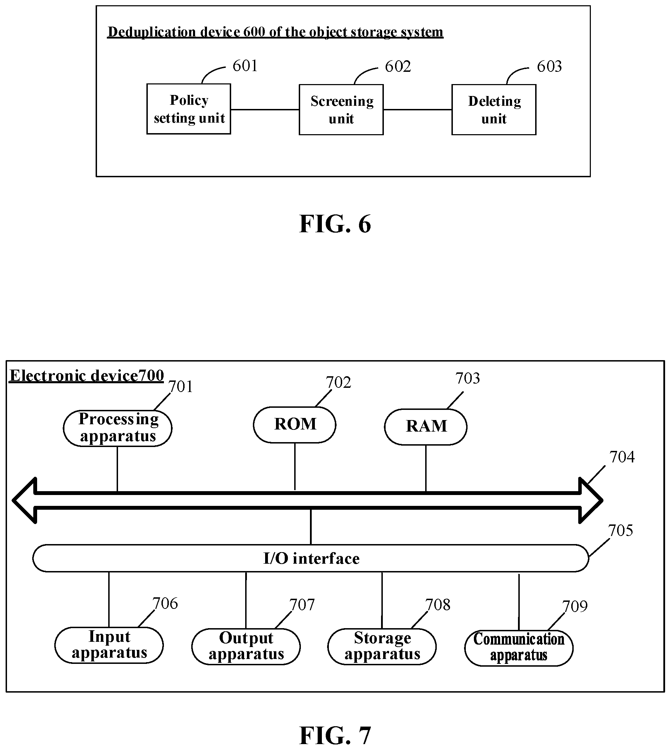

Corresponding to the deduplication method for the object storage system in the above embodiment, FIG. 6 is a structural block diagram of the deduplication device of the object storage system provided by the embodiment of the present disclosure. For the convenience of explanation, only the parts related to the embodiment of the present disclosure are shown. Referring to FIG. 6, the deduplication device 600 of the object storage system in the present embodiment comprises: a policy setting unit 601, a screening unit 602, and a deleting unit 603.

Among them, the policy setting unit 601 is configured to determine the target granularity for deduplication of the object storage system, the target granularity being the object granularity or the slice granularity, wherein the object granularity takes the entire actual data of the object as a data processing unit, and the slice granularity takes the slice data corresponding to the actual data of the object as a data processing unit;
the screening unit 602 is configured to perform duplicate data screening on each data of target granularity in the object storage system;
the deleting unit 603 is configured to add, by taking one data in any group of duplicate data as the reference data, a soft link to the metadata of other data in any group of duplicate data except the reference data to point to the reference data, and recycle the storage space of the other data.

In one or more embodiments of the present disclosure, when the target granularity for deduplication of the object storage system is determined, the policy setting unit 601 is configured to:
determine a first benefit for deduplication of the object storage system at object granularity and a second benefit for deduplication of the object storage system at slice granularity;
determine target granularity of deduplication of the object storage system according to the first benefit and the second benefit.

In one or more embodiments of the present disclosure, when the target granularity for deduplication of the object storage system is determined according to the first benefit and the second benefit, the policy setting unit 601 is configured to:
if the difference between the first benefit and the second benefit is less than a preset threshold, determine the object granularity as the target granularity; or
if the difference between the first benefit and the second benefit is not less than a preset threshold, determine granularity corresponding to a maximum benefit between the first benefit and the second benefit as the target granularity.

In one or more embodiments of the present disclosure, when performing duplicate data screening on each data of target granularity in the object storage system, the screening unit 602 is configured to:
obtain a first check value of each data with a target granularity in the object storage system, and screen out data with the same first check value from the object storage system to determine as the duplicate data.

In one or more embodiments of the present disclosure, when obtaining the first check value of each data of the target granularity in the object storage system and screening out data with the same first check value from the object storage system to determine as the duplicate data, the screening unit 602 is configured to:
traverse each data of the target granularity in the object storage system, obtain the first check value of the currently traversed data during the traversal process, and determine whether the first check value of the currently traversed data matches a historical first check value in a first set, wherein the first set stores each historical first check value obtained for the first time during the traversal process and an identification of the corresponding data;
if it is determined that there is a historical first check value in the first set that is the same as the first check value of the currently traversed data, then determine the currently traversed data as the duplicate data; or
if it is determined that there is no historical first check value in the first set that is the same as the first check value of the currently traversed data, then determine the currently traversed data not as the duplicate data, and take the first check value of the currently traversed data as the historical first check value, and store it in the first set in association with the identification of the currently traversed data.

In one or more embodiments of the present disclosure, when adding, by taking one data in any group of duplicate data as the reference data, a soft link to the metadata of other data in any group of duplicate data except the reference data to point to the reference data, and recycling the storage space of the other data, the deleting unit 603 is configured to:
add, by taking the corresponding data in the first set that is the same as the first check value of the currently traversed data as the reference data, a soft link to the metadata of the currently traversed data to point to the reference data, and recycle the storage space of the currently traversed data.

In one or more embodiments of the present disclosure, if the target granularity is object granularity, the screening unit 602, when traversing each data of the target granularity in the object storage system and obtaining the first check value of the currently traversed data during the traversal process, is configured to:
traverse each object in the object storage system, during the traversal process, obtain a second check value of the currently traversed object from metadata of the currently traversed object, and query the number of occurrence of the second check value of the currently traversed object from a second set, wherein the second set includes each of second check values of all objects in the object storage system and the corresponding number of occurrence; and
if the second check value of the currently traversed object appears more than once, then obtain the actual data of the currently traversed object, and obtain the first check value of the actual data of the currently traversed object.

In one or more embodiments of the present disclosure, before traversing each object in the object storage system, the screening unit 602 is further configured to:
obtain the second check value of all objects from metadata of all objects in the object storage system, and determine the number of occurrence of each second check value among the second check values of all objects; and
construct the second set according to each second check value of all objects and the corresponding number of occurrence.

In one or more embodiments of the present disclosure, if the target granularity is slice granularity, the screening unit 602, when traversing each data of the target granularity in the object storage system and obtaining the first check value of the currently traversed data during the traversal process, is configured to:
traverse each object in the object storage system, obtain actual data of the currently traversed object during the traversal process, and segment the actual data of the currently traversed object to obtain slice data; and
obtain a first check value of the slice data of the currently traversed object.

In one or more embodiments of the present disclosure, if it is determined that there is no historical first check value in the first set that is the same as the first check value of the currently traversed data, then it is determined that the currently traversed data is not duplicate data, and taking the first check value of the currently traversed data as the historical first check value, and storing it in the first set in association with the identification of the currently traversed data, the screening unit 602 is configured to:
if it is determined that there is no historical first check value in the first set that is the same as the first check value of any slice data of the currently traversed object, determine that any slice data is not duplicate data, and rewrite the any slice data into the object storage system as a new slice data, and take the first check value of the new slice data as the historical first check value, and store it in the first set in association with the identification of the new slice data.

In one or more embodiments of the present disclosure, the deleting unit 603, when adding, by taking the historical first check value corresponding data in the first set that is the same as the first check value of the currently traversed data as the reference data, a soft link in the metadata of the currently traversed data to point to the reference data, and recycling the storage space of the currently traversed data, is configured to:
add, by taking the slice data corresponding to the first set of all the slice data included in the currently traversed object as reference data, a soft link pointing to the respective reference data in the metadata of the currently traversed object, and recycle the storage space occupied by the actual data of the currently traversed object.

In one or more embodiments of the present disclosure, when the screening unit 602 segments the actual data of the currently traversed object to obtain slice data, it is configured to:
segment the actual data of each object based on un-fixed length segmentation method of the content; or
segment the actual data of each object using a fixed-length segmentation method.

In one or more embodiments of the present disclosure, when the second benefit for deduplication of the object storage system at the slice granularity is determined, the policy setting unit 601 is configured to:
determine, respectively, the second benefit for deduplication of the object storage system at slice granularity in the case that different segmentation methods and/or different segmenting lengths are used;

Accordingly, after the target granularity for deduplication of the object storage system is determined, the policy setting unit 601 is further configured to:
if the target granularity is determined to be slice granularity, determine the segmentation mode and/or segmentation length corresponding to the maximum second benefit as a target segmentation method and/or a target segmentation length.

In one or more embodiments of the present disclosure, before the target granularity of deduplication of the object storage system is determined, the policy setting unit 601 is further configured to:
determine a target range for deduplication in the object storage system to perform deduplication within the target range;

Accordingly, when the target granularity for deduplication of the object storage system is determined, the policy setting unit 601 is configured to:
determine the target granularity for deduplication within the target range.

In one or more embodiments of the present disclosure, when a target range for deduplication in the object storage system is determined, the policy setting unit 601 is configured to:
obtain a second check value for each object in a plurality of target data buckets in the object storage system;
determine a first repetition ratio of objects in each target data bucket and a second repetition ratio of objects in multiple target data buckets according to the second check value; and
determine a target range for deduplication in the object storage system according to the first duplication ratio and the second duplication ratio.

In one or more embodiments of the present disclosure, when a target range for deduplication in the object storage system is determined according to the first duplication ratio and the second duplication ratio, the policy setting unit 601 is configured to:
If the second repetition ratio exceeds a preset ratio, determine the target range as the plurality of target data buckets; or
If the second repetition ratio does not exceed the preset ratio, and the first repetition ratio corresponding to any target data bucket exceeds the preset ratio, determine the target range as any target data bucket.

The device provided in this embodiment can be used to execute the technical solution of the above method embodiment, and maximizes the benefit of deduplication by determining the target granularity of deduplication, and reduces the performance overhead of deduplication within the object storage system and improves stability and security by screening duplicate data and pointing to reference data through soft links in the metadata of the duplicate data. The implementation principle and technical effects are similar and will not be repeated in this embodiment.

Referring to FIG. 7, it shows a schematic diagram of the structure of an electronic device 700 suitable for implementing an embodiment of the present disclosure, and the electronic device 700 may be a terminal device or a server. The terminal device may include, but is not limited to, mobile terminals such as mobile phones, laptop computers, digital broadcast receivers, personal digital assistants (PDAs), tablet computers (Portable Android Devices, PADs), portable multimedia players (Portable Media Players, PMPs), vehicle-mounted terminals (such as vehicle-mounted navigation terminals), etc., and fixed terminals such as digital TVs, desktop computers, etc. The electronic device shown in FIG7 is only an example and should not impose any limitations on the functions and scope of use of the embodiments of the present disclosure.

As shown in FIG. 7, The electronic device 700 may comprise a processing apparatus (such as a central processing unit, a graphics processor, etc.) 701, which may perform various appropriate actions and processing according to a program stored in a Read Only Memory (ROM) 702 or a program loaded from a storage device 708 into a Random Access Memory (RAM) 703. In the RAM 703, various programs and data required for the operation of the electronic device 700 are also stored. A processing apparatus 701, a ROM 702 and a RAM 703 are connected to each other through a bus 704. An input/output (I/O) interface 705 is also connected to the bus 704.

Typically, the following apparatus may be connected to the I/O interface 705: input apparatus 706 including, for example, a touch screen, a touchpad, a keyboard, a mouse, a camera, a microphone, an accelerometer, a gyroscope, etc.; output apparatus 707 including, for example, a liquid crystal display (LCD), a speaker, a vibrator, etc.; storage apparatus 708 including, for example, a magnetic tape, a hard disk, etc.; and, communication apparatus 709. The communication apparatus 709 may allow the electronic device 700 to communicate with other devices wirelessly or by wire to exchange data. Although FIG. 7 shows an electronic device 700 having various devices, it should be understood that it is not required to implement or have all the devices shown. More or fewer devices may be implemented or have alternatively.

In particular, according to an embodiment of the present disclosure, the process described above with reference to the flowchart can be implemented as a computer software program. For example, an embodiment of the present disclosure includes a computer program product, which includes a computer program carried on a computer-readable medium, and the computer program includes a program code for executing the method shown in the flowchart. In such an embodiment, the computer program can be downloaded and installed from a network through a communication apparatus 709, or installed from a storage apparatus 708, or installed from a ROM 702. When the computer program is executed by the processing apparatus 701, the above-mentioned functions defined in the method of the embodiment of the present disclosure are executed.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus or device. In the present disclosure, a computer-readable signal medium may include a data signal propagated in a baseband or as part of a carrier wave, which carries a computer-readable program code. This propagated data signal may take a variety of forms, including but not limited to electromagnetic signals, optical signals, or any suitable combination of the above. Computer readable signal media may also be any computer readable medium other than computer readable storage media, which may send, propagate or transmit a program for use by or in conjunction with an instruction execution system, apparatus or device. The program code contained on the computer readable medium may be transmitted using any appropriate medium, including but not limited to: wires, optical cables, RF (radio frequency), etc., or any suitable combination of the above.

The computer-readable medium may be included in the electronic device, or may exist independently without being incorporated into the electronic device.

The computer-readable medium carries one or more programs. The one or more programs, when executed by the electronic device, cause the electronic device to execute the method shown in the above embodiment.

Computer program code for performing the operations of the present disclosure may be written in one or more programming languages or a combination thereof, including object-oriented programming languages such as Java, Smalltalk, C++, and conventional procedural programming languages such as "C" or similar programming languages. The program code may be executed entirely on the user's computer, partially on the user's computer, as a separate software package, partially on the user's computer and partially on a remote computer, or entirely on a remote computer or server. In the case of a remote computer, the remote computer may be connected to the user's computer through any type of network, including a Local Area Network (LAN) or a Wide Area Network (WAN), or may be connected to an external computer (e.g., through the Internet using an Internet service provider).

The flow chart and block diagram in the accompanying drawings illustrate the possible architecture, function and operation of the system, method and computer program product according to various embodiments of the present disclosure. In this regard, each square box in the flow chart or block diagram can represent a module, a program segment or a part of a code, and the module, the program segment or a part of the code contains one or more executable instructions for realizing the specified logical function. It should also be noted that in some implementations as replacements, the functions marked in the square box can also occur in a sequence different from that marked in the accompanying drawings. For example, two square boxes represented in succession can actually be executed substantially in parallel, and they can sometimes be executed in the opposite order, depending on the functions involved. It should also be noted that each square box in the block diagram and/or flow chart, and the combination of the square boxes in the block diagram and/or flow chart can be implemented with a dedicated hardware-based system that performs a specified function or operation, or can be implemented with a combination of dedicated hardware and computer instructions.

The units involved in the embodiments described in the present disclosure may be implemented by software or hardware. The name of a unit does not limit the unit itself in some cases. For example, the first acquisition unit may also be described as a "unit for acquiring at least two Internet Protocol addresses".

The functions described above herein may be performed at least in part by one or more hardware logic components. For example, without limitation, exemplary types of hardware logic components that may be used include: field programmable gate arrays (FPGAs), application specific integrated circuits (ASICs), application specific standard products (ASSPs), systems on chips (SOCs), complex programmable logic devices (CPLDs), and the like.

In the context of the present disclosure, a machine-readable medium may be a tangible medium that may contain or store a program for use by or in conjunction with an instruction execution system, apparatus, or equipment. A machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. A more specific example of a machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

In a first aspect, according to one or more embodiments of the present disclosure, a method for deduplication of an object storage system is provided, comprising:
determining target granularity for deduplication of the object storage system, the target granularity being object granularity or slice granularity, wherein the object granularity takes the entire actual data of the object as a data processing unit, and the slice granularity takes the slice data corresponding to the actual data of the object as a data processing unit;
performing duplicate data screening on each data of target granularity in the object storage system;
adding, by taking one data in any group of duplicate data as the reference data, a soft link to the metadata of other data in any group of duplicate data except the reference data to point to the reference data, and recycling storage space of the other data.

According to one or more embodiments of the present disclosure, determining target granularity for deduplication of the object storage system comprises:
determining a first benefit for deduplication of the object storage system at the object granularity and a second benefit for deduplication of the object storage system at the slice granularity; and
determining the target granularity for the deduplication of the object storage system according to the first benefit and the second benefit.

According to one or more embodiments of the present disclosure, determining the target granularity for the deduplication of the object storage system according to the first benefit and the second benefit comprises:
if the difference between the first benefit and the second benefit is less than a preset threshold, determining the object granularity as the target granularity; or
if the difference between the first benefit and the second benefit is not less than a preset threshold, determining granularity corresponding to a maximum benefit between the first benefit and the second benefit as the target granularity.

According to one or more embodiments of the present disclosure, performing the duplicate data screening on each data of target granularity in the object storage system comprises:
obtaining a first check value of each data of the target granularity in the object storage system, and screening out data with the same first check value from the object storage system to determine as the duplicate data.

According to one or more embodiments of the present disclosure, obtaining the first check value of each data of the target granularity in the object storage system, and screening out the data with the same first check value from the object storage system to determine as the duplicate data comprises:
traversing each data of the target granularity in the object storage system, obtaining the first check value of the currently traversed data in a traversal process, and determining that the first check value of the currently traversed data matches a historical first check value in a first set, wherein the first set stores each historical first check value obtained for the first time in the traversal process and an identification of corresponding data; and
if it is determined that there is a historical first check value in the first set that is the same as the first check value of the currently traversed data, then determining the currently traversed data to be duplicate data; or
if it is determined that there is no historical first check value in the first set that is the same as the first check value of the currently traversed data, determining the currently traversed data not to be the duplicate data, and taking the first check value of the currently traversed data as the historical first check value and storing it in the first set in association with the identification of the currently traversed data.

According to one or more embodiments of the present disclosure, adding, by taking one data in any group of duplicate data as the reference data, a soft link to the metadata of other data in any group of the duplicate data except the reference data to point to the reference data, and recycling the storage space of the other data, comprises:
adding, by taking the data corresponding to the first check value in the first set that is the same as the first check value of the currently traversed data as the reference data, the soft link to the metadata of the currently traversed data to point to the reference data, and recycling the storage space of the currently traversed data.

According to one or more embodiments of the present disclosure, if the target granularity is object granularity, traversing each data of the target granularity in the object storage system and obtaining a first check value of the currently traversed data during the traversal process comprises:
traversing each object in the object storage system, obtaining a second check value of the currently traversed object from metadata of the currently traversed object in the traversal process, and querying a number of occurrence of the second check value of the currently traversed object from a second set, wherein the second set includes each of second check values of all objects in the object storage system and a corresponding number of occurrence; and
if the number of occurrence of the second check value of the currently traversed object being greater than one, obtaining the actual data of the currently traversed object, and then obtaining the first check value of the actual data of the currently traversed object.

According to one or more embodiments of the present disclosure, before traversing each object in the object storage system, the method further comprises:
obtaining the second check values of all objects from metadata of all objects in the object storage system, and determining the number of occurrence of each second check value among the second check values of all objects; and
constructing the second set according to each of the second check values of all objects and the corresponding number of occurrence.

According to one or more embodiments of the present disclosure, if the target granularity is slice granularity, traversing each data of the target granularity in the object storage system and obtaining a first check value of the currently traversed data during the traversal process, comprises:
traversing each object in the object storage system, obtaining the actual data of the currently traversed object in the traversal process, and segmenting the actual data of the currently traversed object to obtain slice data; and
obtaining a first check value of the slice data of the currently traversed object.

According to one or more embodiments of the present disclosure, if it is determined that there is no historical first check value in the first set that is the same as the first check value of the currently traversed data, then determining that the currently traversed data is not duplicate data, and taking the first check value of the currently traversed data as the historical first check value, and storing it in the first set in association with the identification of the currently traversed data, comprises:

If it is determined that there is no historical first check value in the first set that is the same as the first check value of any slice data of the currently traversed object, then determining that any slice data is not duplicate data, and rewriting the any slice data into the object storage system as a new slice data, and taking the first check value of the new slice data as the historical first check value, and storing it in the first set associated with the identification of the new slice data.

According to one or more embodiments of the present disclosure, adding, by taking the historical first check value corresponding data in the first set that is the same as the first check value of the currently traversed data as the reference data, a soft link to the metadata of the currently traversed data to point to the reference data, and recycling the storage space of the currently traversed data comprises:
adding, by taking the slice data corresponding to the first set of all the slice data included in the currently traversed object as the reference data, a soft link pointing to the respective reference data to the metadata of the currently traversed object, and recycling the storage space occupied by the actual data of the currently traversed object.

According to one or more embodiments of the present disclosure, segmenting the actual data of the currently traversed object to obtain slice data, comprising:
segmenting the actual data of each object based on an un-fixed length segmentation method of content; or
segmenting the actual data of each object using a fixed-length segmentation method.

According to one or more embodiments of the present disclosure, determining a second benefit for the deduplication of an object storage system at the slice granularity comprises:
respectively determining the second benefit for the deduplication of the object storage system at the slice granularity under a condition of adopting different segmentation methods and /or different segmentation lengths; and
correspondingly, after determining the target granularity for the deduplication of the object storage system, the method further comprises:
if it is determined that the target granularity is the slice granularity, determining a segmentation mode and/or a segmentation length corresponding to the maximum second benefit as a target segmentation method and/or a target segmentation length.

According to one or more embodiments of the present disclosure, before determining the target granularity for deduplication of the object storage system, the method further comprises:
determining a target range for deduplication in the object storage system to perform deduplication within the target range;
accordingly, determining the target granularity for deduplication of the object storage system comprises:
determining the target granularity for deduplication within the target range.

According to one or more embodiments of the present disclosure, determining a target range for deduplication in the object storage system comprises:
obtaining a second check value for each object in a plurality of target data buckets in the object storage system;
determining a first repetition ratio of objects in each target data bucket and a second repetition ratio of objects in multiple target data buckets according to the second check value; and
determining the target range for deduplication in the object storage system according to the first duplication ratio and the second duplication ratio.

According to one or more embodiments of the present disclosure, determining a target range for deduplication in the object storage system according to the first duplication ratio and the second duplication ratio comprises:
if the second repetition ratio exceeds a preset ratio, determining the target range to be the plurality of target data buckets; or
if the second repetition ratio does not exceed the preset ratio, and the first repetition ratio corresponding to any target data bucket exceeds the preset ratio, determining the target range to be any target data bucket.

In a second aspect, according to one or more embodiments of the present disclosure, a deduplication device for an object storage system is provided, comprising:
a policy setting unit, configured to determine target granularity for deduplication of the object storage system, the target granularity being object granularity or slice granularity, wherein the object granularity takes entire actual data of the object as a data processing unit, and the slice granularity takes the slice data corresponding to the actual data of the object as a data processing unit;
a screening unit, configured to perform duplicate data screening on each data of target granularity in the object storage system; and
a deleting unit, configured to add, by taking one data in any group of duplicate data as the reference data, a soft link in the metadata of other data in any group of duplicate data except the reference data to point to the reference data, and recycle the storage space of the other data.

According to one or more embodiments of the present disclosure, when determining the target granularity for deduplication of the object storage system, the policy setting unit is configured to:
determine a first benefit for deduplication of the object storage system at object granularity and a second benefit for deduplication of the object storage system at slice granularity;
determine the target granularity for deduplication of the object storage system according to the first benefit and the second benefit.

According to one or more embodiments of the present disclosure, when determining the target granularity for deduplication of the object storage system according to the first benefit and the second benefit, the policy setting unit is configured to:
if the difference between the first benefit and the second benefit is less than a preset threshold, determine the target granularity to be the object granularity; or
if the difference between the first benefit and the second benefit is not less than a preset threshold, determine granularity corresponding to a maximum benefit between the first benefit and the second benefit as the target granularity.

According to one or more embodiments of the present disclosure, when the screening unit performs duplicate data screening on each data of the target granularity in the object storage system, it is configured to:
obtain a first check value of each data of the target granularity in the object storage system, and screen out data with the same first check value from the object storage system to determine as the duplicate data.

According to one or more embodiments of the present disclosure, when the screening unit obtains the first check value of each data of the target granularity in the object storage system and screens out data with the same first check value from the object storage system to determine as duplicate data, it is configured to:
traverse each data of the target granularity in the object storage system, obtain the first check value of the currently traversed data in a traversal process, and determine that the first check value of the currently traversed data matches a historical first check value in a first set, wherein the first set stores each historical first check value obtained for the first time in the traversal process and an identification of corresponding data;
if it is determined that there is a historical first check value in the first set that is the same as the first check value of the currently traversed data, determine the currently traversed data to be the duplicate data; or
if it is determined that there is no historical first check value in the first set that is the same as the first check value of the currently traversed data, determine the currently traversed data not to be the duplicate data, and take the first check value of the currently traversed data as the historical first check value, and store it in the first set in association with the identification of the currently traversed data.

According to one or more embodiments of the present disclosure, when the deletion unit adds, by taking one data in any group of duplicate data as the reference data, a soft link in the metadata of other data in the any group of duplicate data except the reference data to point to the reference data, and recycle the storage space of the other data, it is configured to:
add, by taking the first check value corresponding data in the first set that is the same as the first check value of the currently traversed data as the reference data, a soft link to the metadata of the currently traversed data to point to the reference data, and recycle the storage space of the currently traversed data.

According to one or more embodiments of the present disclosure, if the target granularity is object granularity, when traversing each data of the target granularity in the object storage system and obtaining a first check value of the currently traversed data during the traversal process, the screening unit is configured to:
traverse each object in the object storage system, obtain a second check value of the currently traversed object from metadata of the currently traversed object during the traversal process, and query the number of occurrence of the second check value of the currently traversed object from a second set, wherein the second set includes each of the second check value of all objects in the object storage system and a corresponding number of occurrence; and
if the second check value of the currently traversed object appears more than once, then obtain the actual data of the currently traversed object, and obtain the first check value of the actual data of the currently traversed object.

According to one or more embodiments of the present disclosure, before traversing each object in the object storage system, the screening unit is further configured to:
obtain the second check value of all objects from metadata of all objects in the object storage system, and determine the number of occurrence of each second check value among the second check values of all objects; and
construct the second set according to each of the second check values of all objects and the corresponding number of occurrence.

According to one or more embodiments of the present disclosure, if the target granularity is slice granularity, when traversing each data of the target granularity in the object storage system and obtaining a first check value of the currently traversed data during the traversal process, the screening unit is configured to:
traverse each object in the object storage system, obtain actual data of the currently traversed object during the traversal process, and segment the actual data of the currently traversed object to obtain slice data; and
obtain a first check value of the slice data of the currently traversed object.

According to one or more embodiments of the present disclosure, the screening unit, if determining that there is no historical first check value in the first set that is the same as the first check value of the currently traversed data, then determining that the currently traversed data is not duplicate data, and taking the first check value of the currently traversed data as the historical first check value, and storing it in the first set in association with the identification of the currently traversed data, is configured to:

if it is determined that there is no historical first check value in the first set that is the same as the first check value of any slice data of the currently traversed object, determine that any slice data is not duplicate data, and rewrite the any slice data into the object storage system as a new slice data, and take the first check value of the new slice data as the historical first check value, and store it in the first set in association with the identification of the new slice data.

According to one or more embodiments of the present disclosure, when taking the historical first check value corresponding data in the first set that is the same as the first check value of the currently traversed data as the reference data, adding a soft link in the metadata of the currently traversed data to point to the reference data, and recycling the storage space of the currently traversed data, the deletion unit is configured to:
add, by taking the slice data in the first set corresponding to all the slice data included in the currently traversed object as reference data, a soft link pointing to the respective reference data to the metadata of the currently traversed object, and recycle the storage space occupied by the actual data of the currently traversed object.

According to one or more embodiments of the present disclosure, when the screening unit segment the actual data of the currently traversed object to obtain slice data, it is configured to:
segment the actual data of each object based on an un-fixed length segmentation method of content; or
segment the actual data of each object using a fixed-length segmentation method.

According to one or more embodiments of the present disclosure, when determining the second benefit for deduplication of the object storage system at the slice granularity, the policy setting unit is configured to:
respectively determining the second benefit for the deduplication of the object storage system at the slice granularity under a condition of adopting different segmentation modes and/or different segmentation lengths;
correspondingly, after determining the target granularity for the deduplication of the object storage system, the method further comprises:
in response to determining the target granularity to be the slice granularity, determining a segmentation mode and/or a segmentation length corresponding to the maximum second benefit as a target segmentation mode and/or a target segmentation length.

According to one or more embodiments of the present disclosure, before determining the target granularity for deduplication of the object storage system, the policy setting unit is further configured to:
determine a target range for deduplication in the object storage system to perform deduplication within the target range;
accordingly, when determining the target granularity for deduplication of the object storage system, the policy setting unit is configured to:
determine the target granularity for deduplication within the target range.

According to one or more embodiments of the present disclosure, when determining a target range for deduplication in the object storage system, the policy setting unit is configured to:
obtain a second check value for each object in a plurality of target data buckets in the object storage system;
determine a first repetition ratio of objects in each target data bucket and a second repetition ratio of objects in multiple target data buckets according to the second check value; and
determine the target range for deduplication in the object storage system according to the first duplication ratio and the second duplication ratio.

According to one or more embodiments of the present disclosure, when the policy setting unit determines a target range for deduplication in the object storage system according to the first duplication ratio and the second duplication ratio, it is configured to:
if the second repetition ratio exceeds a preset ratio, determine the target range to be the plurality of target data buckets; or
if the second repetition ratio does not exceed the preset ratio, and the first repetition ratio corresponding to any target data bucket exceeds the preset ratio, determine the target range to be any target data bucket.

In a third aspect, according to one or more embodiments of the present disclosure, there is provided an electronic device, comprising: at least one processor and a memory;
the memory stores computer-executable instructions; and
the at least one processor executes the computer-executable instructions stored in the memory, causing the at least one processor to execute the method for deduplication of the object storage system as described in the first aspect and various possible designs of the first aspect.

In a fourth aspect, according to one or more embodiments of the present disclosure, a computer-readable storage medium is provided, wherein the computer-readable storage medium stores computer execution instructions. The computer execution instructions, when executed by a processor, implement the method for deduplication of the object storage system as described in the first aspect and various possible designs of the first aspect.

In a fifth aspect, according to one or more embodiments of the present disclosure, a computer program product is provided, comprising computer execution instructions. The computer execution instructions, when executed by a processor executes, implement the method for deduplication of the object storage system as described in the first aspect and various possible designs of the first aspect.

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept. For example, the above features are replaced with the technical features with similar functions disclosed in the present disclosure (but not limited to) by each other to form a technical solution.

In addition, although each operation is described in a specific order, this should not be understood as requiring these operations to be performed in the specific order shown or in a sequential order. Under certain circumstances, multitasking and parallel processing may be advantageous. Similarly, although some specific implementation details are included in the above discussion, these should not be interpreted as limiting the scope of the present disclosure. Some features described in the context of a separate embodiment can also be implemented in a single embodiment in combination. On the contrary, the various features described in the context of a single embodiment can also be implemented in multiple embodiments individually or in any suitable sub-combination mode.

Although the subject matter has been described in language specific to structural features and/or methodological logical actions, it should be understood that the subject matter defined in the appended claims is not necessarily limited to the specific features or actions described above. On the contrary, the specific features and actions described above are merely example forms of implementing the claims.

## Claims

1. A method for deduplication of an object storage system, comprising:
determining (S201) target granularity for deduplication of the object storage system, the target granularity being object granularity or slice granularity, wherein the object granularity takes entire actual data of an object as a data processing unit, and the slice granularity takes slice data corresponding to the actual data of the object as a data processing unit;
performing (S202) duplicate data screening on each data of target granularity in the object storage system; and
adding (S203), by taking one data in any group of duplicate data as reference data, a soft link to metadata of other data in any group of the duplicate data except the reference data to point to the reference data, and recycling storage space of the other data.

2. The method according to claim 1, wherein determining the target granularity for deduplication of the object storage system comprises:
determining a first benefit for deduplication of the object storage system at the object granularity and a second benefit for deduplication of the object storage system at the slice granularity; and
determining the target granularity for the deduplication of the object storage system according to the first benefit and the second benefit.

3. The method according to claim 2, wherein determining the target granularity for the deduplication of the object storage system according to the first benefit and the second benefit comprises:
in response to a difference between the first benefit and the second benefit being less than a preset threshold, determining the object granularity as the target granularity; or
in response to the difference between the first benefit and the second benefit being not less than the preset threshold, determining a granularity corresponding to a maximum benefit between the first benefit and the second benefit as the target granularity.

4. The method according to claim 1, wherein performing the duplicate data screening on each data of the target granularity in the object storage system comprises:
obtaining a first check value of each data of the target granularity in the object storage system, and screening out data with the same first check value from the object storage system to determine as the duplicate data.

5. The method according to claim 4, wherein obtaining the first check value of each data of the target granularity in the object storage system and screening out the data with the same first check value from the object storage system to determine as the duplicate data comprises:
traversing (S201) each data of the target granularity in the object storage system, obtaining the first check value of the currently traversed data in a traversal process, and determining that the first check value of the currently traversed data matches a historical first check value in a first set, wherein the first set stores each historical first check value obtained for the first time in the traversal process and an identification of corresponding data;
in response to determining that there is a historical first check value in the first set that is the same as the first check value of the currently traversed data, determining (S202) the currently traversed data to be the duplicate data; or
in response to determining that there is no historical first check value in the first set that is the same as the first check value of the currently traversed data, determining (S203) the currently traversed data not to be the duplicate data, and taking the first check value of the currently traversed data as the historical first check value, and storing it in the first set in association with the identification of the currently traversed data.

6. The method according to claim 5, wherein adding, by taking one data in any group of the duplicate data as the reference data, a soft link in the metadata of other data in any group of the duplicate data except the reference data to point to the reference data, and recycling the storage space of the other data comprises:
adding, by taking the data corresponding to the first check value in the first set that is the same as the first check value of the currently traversed data as the reference data, the soft link to the metadata of the currently traversed data to point to the reference data, and recycling the storage space of the currently traversed data.

7. The method according to claim 6, wherein in response to the target granularity being the object granularity, traversing each data of the target granularity in the object storage system and obtaining the first check value of the currently traversed data in the traversal process comprises:
traversing each object in the object storage system, obtaining a second check value of the currently traversed object from metadata of the currently traversed object in the traversal process, and querying a number of occurrence of the second check value of the currently traversed object from a second set, wherein the second set includes each of second check values of all objects in the object storage system and a corresponding number of occurrence; and
in response to the number of occurrence of the second check value of the currently traversed object being greater than one, obtaining the actual data of the currently traversed object, and obtaining the first check value of the actual data of the currently traversed object.

8. The method according to claim 6, wherein in response to the target granularity being the slice granularity, traversing each data of the target granularity in the object storage system and obtaining the first check value of the currently traversed data in the traversal process comprises:
traversing each object in the object storage system, obtaining the actual data of the currently traversed object in the traversal process, and segmenting the actual data of the currently traversed object to obtain slice data; and
obtaining the first check value of the slice data of the currently traversed object.

9. The method according to claim 8, wherein in response to determining that there is no historical first check value in the first set that is the same as the first check value of the currently traversed data, determining the currently traversed data not to be the duplicate data, and storing, by taking the first check value of the currently traversed data as the historical first check value, the first check value in the first set in association with the identification of the currently traversed data, comprises:
in response to determining that there is no historical first check value in the first set that is the same as the first check value of any slice data of the currently traversed object, determining any of the slice data not to be duplicate data, and rewriting any of the slice data into the object storage system as new slice data, and storing, by taking the first check value of the new slice data as the historical first check value, the first check value in the first set in association with an identification of the new slice data.

10. The method according to claim 9, wherein adding, by taking the historical first check value corresponding data in the first set that is the same as the first check value of the currently traversed data as the reference data, the soft link in the metadata of the currently traversed data to point to the reference data, and recycling the storage space of the currently traversed data comprises:
adding, by taking the slice data corresponding to all the slice data included in the currently traversed object in the first set as the reference data, a soft link pointing to the respective reference data to the metadata of the currently traversed object, and recycling the storage space occupied by the actual data of the currently traversed object.

11. The method according to claim 8, wherein segmenting the actual data of the currently traversed object to obtain the slice data comprises:
segmenting the actual data of each object based on an un-fixed length segmentation method of content; or
segmenting the actual data of each object using a fixed-length segmentation method.

12. The method according to claim 2, wherein determining the second benefit for the deduplication of the object storage system at the slice granularity comprises:
respectively determining the second benefit for the deduplication of the object storage system at the slice granularity under a condition of adopting different segmentation modes and/or different segmentation lengths; and
correspondingly, after determining the target granularity for the deduplication of the object storage system, the method further comprises:
in response to determining the target granularity to be the slice granularity, determining a segmentation mode and/or a segmentation length corresponding to the maximum second benefit as a target segmentation mode and/or a target segmentation length.

13. The method according to any one of claims 1 to 12, wherein before determining the target granularity for the deduplication of the object storage system, further comprises:
determining a target range for the deduplication in the object storage system to perform the deduplication within the target range; and
accordingly, determining the target granularity for the deduplication of the object storage system comprises:
determining the target granularity for the deduplication within the target range.

14. An electronic device, comprising: at least one processor and a memory;
the memory stores computer-executable instructions; and
the at least one processor executes the computer-executable instructions stored in the memory, causing the at least one processor to execute the method according to any of claims 1 to 13.

15. A computer program product, comprising computer executable instructions, which, when executed by a processor, implement the method according to any of claims 1 to 13.
